# EUROPEAN PATENT APPLICATION

(11) **EP 4 679 276 A1**
(43) Date of publication of application: **14.01.2026**
(21) Application number: 25183292.9
(22) Date of filing: 17.06.2025
(51) Int. Cl.: G06F 11/362, G06F 21/76, G06F 21/85

(54) **SELECTIVE TRACING BASED ON ISOLATION IN SOFTWARE BASED DEVICES**

(30) Priority: 27.06.2024 IN 202441049196
(71) Applicant: NXP USA, Inc., Austin, TX 78735 (US)
(72) Inventor: Agarwal, Ayushi, 5656 AG Eindhoven (NL); Chopra, Aditya Vikram, 5656 AG Eindhoven (NL); Mala, Juhee, 5656 AG Eindhoven (NL)
(74) Representative: Miles, John Richard

(57) **Abstract**

An apparatus and method are disclosed for a System on Chip (SoC) which includes a central interconnect fabric connected between a plurality of initiators and targets, where the central interconnect includes one or more debug trace probes for connection to a debugger, where each debug trace probe is connected with debug firewall control logic configured to allow a data trace packet from a first cohort to be traced out to the debug trace probe only if the data trace packet includes a CID value associated with the first cohort that matches a CCID value associated with a configuring cohort which configures the debug trace probe, and where the debug firewall control logic includes a secure trace enable multiplexer connected to packet capture control logic which is configured to output a packet capture enable signal indicating whether the data trace packet is a secure packet or unsecure packet.

## Description

### BACKGROUND OF THE INVENTION

### Field of the Invention

The present disclosure is directed in general to the field of data processing systems. In one aspect, the present disclosure relates to providing secure and flexible trace-based debugging protection at Systems-on-Chip interconnect used with integrated circuit data processing systems.

### Description of the Related Art

Hardware debug instruments, such as internal and boundary scan chains, hardware performance counters, defeaturing bits, microcode patches, and real-time signal tracing, are added to the design of a system-on-chip (SoC) to facilitate post-silicon debugging by allowing the capture of real-time performance statistics, internal signals and register values. Unfortunately, there is a conflict between providing observability during trace-based debugging and enforcing security of a system-on-chip (SoC). For example, the ability of debug instruments to observe the inner workings of the SoC can be used as a backdoor for attacks, such as by using the internal and boundary scan chains to leak SoC cryptographic keys. Fixed or hardware-based debug systems have been developed which seek to balance the security of assets with the observability of a debug instruments, such as by permanently disabling the debug infrastructure after silicon validation. Other solutions have been proposed which use fixed configuration register values which are specified during design phase to tag each asset with an owner identification value. However, such fixed solutions are poorly suited for state-of-the-art SoCs with zonal architectures which require virtualization to drive efficiency and scalability. Other deficiencies with existing fixed debug instrument solutions are that they are not able to flexibly specify security features to enforce all access use cases of an asset and to be adaptable to different SoCs and/or changes in the design of the debug instruments. Another deficiency with existing fixed debug instrument solutions is that they provide trace protection within specific nodes of an SoC system , but do not provide tracing security protection over a shared interconnect or bus which is accessible from multiple nodes and can trace out data of the other nodes. As seen from the foregoing, existing solutions for operating and controlling SoC-based data processing systems are extremely difficult at a practical level by virtue of the challenges with securely providing trace-based debugging over SoC interconnect throughout the SoC life cycle. Further limitations and disadvantages of conventional processes and technologies will become apparent to one of skill in the art after reviewing the remainder of the present application with reference to the drawings and detailed description which follow.

### BRIEF DESCRIPTION OF THE DRAWINGS

The present invention may be understood, and its numerous objects, features and advantages obtained, when the following detailed description is considered in conjunction with the following drawings, in which:
Figure 1 depicts a simplified block diagram of a zonal controller processing system having a debug architecture with a common debug enable for the central interconnect.
Figure 2 depicts an interconnect trace architecture used with conventional debug architecture for zonal devices.
Figure 3 depicts a debug architecture for zonal devices which uses Cohort ID (CID) based trace packet filtering mechanism in accordance with selected embodiments of the present disclosure.
Figure 4 depicts a simplified schematic circuit block diagram of a secure trace enable multiplexer in accordance with selected embodiments of the present disclosure.
Figure 5 depicts a debug architecture which uses a Cohort ID (CID) based trace packet filtering mechanism and secure trace enable multiplexer to enable dynamic switching of secure trace enables between different cohorts in accordance with selected embodiments of the present disclosure.
Figure 6 depicts a simplified schematic circuit block diagram of a firewall control logic connected between a cohort and an interconnect trace probe which uses a secure trace enable multiplexer and filter to securely enable traces over the interconnect bus in accordance with selected embodiments of the present disclosure.
Figure 7 is a truth table for a n-bit "AND" gate component in the probe filter in accordance with selected embodiments of the present disclosure.
Figure 8 is a truth table for an "OR" gate component in the probe filter in accordance with selected embodiments of the present disclosure.
Figure 9 illustrates a simplified block diagram of a design implementation of a Network on Chip (NoC) having a plurality of trace probes, each including firewall placeholder which has a filter and a secure trace enable multiplexer (STEM) in accordance with selected embodiments of the present disclosure.

### DETAILED DESCRIPTION

A SoC debug architecture, system, apparatus, and method of operation are described for enabling secure debug tracing over a central interconnect or crossbar which connects the SoC to a plurality of zone controllers by providing a software-based firewall at each trace probe of an interconnect. In operation, the software-based firewall at each trace probe may be configured by a configuring core with a latched cohort identification (CCID) value which identifies the cohort that is permitted to generate traffic over the trace probe. Once the CCID value is latched, the software-based firewall, alone or in combination with a secure trace enable multiplexer, is operative to filter any subsequent data trace packets to the trace probe by determining if the cohort identification (ID) value contained in each data trace packet matches the CCID value. In the disclosed SoC debug architecture, the firewall provided for each interconnect trace probe selectively enables packet access to the interconnect trace probe by using a firewall filter to compare a CID value from a data trace packet with a CCID value that is stored at the firewall filter by a configuring core, and to trace the packet via the interconnect trace probe only when there is a match between the CID value and the CCID value. In addition, the firewall of the disclosed SoC debug architecture may also include a secure trace enable multiplexer which is used by the firewall filter to trace the packet via the interconnect trace probe based on secure transactions to avoid security vulnerabilities. The disclosed SoC debug architecture may be advantageously deployed to solve the problem of data exposure through traces between multiple cohorts which use different or shared SoC subsystem resources sharing a common central interconnect by using the firewall filter to restrict interconnect trace probes to trace only data that is relevant to a cohort identification value latched through access by the configuring core. To this end, each subsystem of a central SoC computer may include a trace configuring core which configures the probe for trace and whose CID value is latched by the firewall, and any time another core at any SoC cohort attempts to send data trace packet traffic to the interconnect trace probe, the firewall filter compares the CID value from the data trace packet traffic with the CCID value, thereby enabling data trace packet traffic to pass to the interconnect trace probe only when there is a match between the CID value and CCID value. In addition, selected SoC cohorts may include a secure trace enable bit which is provided as an input to a secure trace enable multiplexer (STEM) at each firewall filter, where the secure trace enable bit indicates whether the cohort is allowed to trace out secure packets. As a result, any time a secure trace enable multiplexer (STEM) receives a CCID value from the configuring core as a multiplexer selection control input, the STEM uses the CCID value to select and output a corresponding secure trace enable bit as a "secure trace enable" signal, and control logic in the firewall filter can then determine whether the cohort sending the data trace packet traffic is allowed to trace out secure packets, thereby enabling filtering based on secure transactions to avoid security vulnerabilities.

Various illustrative embodiments of the present invention will now be described in detail with reference to the accompanying figures which illustrate functional and/or logical block components and various processing steps. While various details are set forth in the following description, it will be appreciated that the present invention may be practiced without these specific details, and that numerous implementation-specific decisions may be made to the invention described herein to achieve the device designer's specific goals, such as compliance with process technology or design-related constraints, which will vary from one implementation to another. While such a development effort might be complex and time-consuming, it would nevertheless be a routine undertaking for those of ordinary skill in the art having the benefit of this disclosure. For example, selected embodiments of the present invention are implemented, for the most part, with electronic components and circuits known to those skilled in the art, and as a result, circuit details have not been explained in any greater extent since such details are well known and not considered necessary to teach one skilled in the art of how to make or use the present invention. In addition, selected aspects are depicted with reference to simplified circuit schematics, logic diagrams, and flow chart drawings without including every circuit detail or feature in order to avoid limiting or obscuring the present invention. Such descriptions and representations are used by those skilled in the art to describe and convey the substance of their work to others skilled in the art. In general, an algorithm refers to a self-consistent sequence of steps leading to a desired result, where a "step" refers to a manipulation of physical quantities which may, though need not necessarily, take the form of electrical or magnetic signals capable of being stored, transferred, combined, compared, and otherwise manipulated. It is common usage to refer to these signals as bits, values, elements, symbols, characters, terms, numbers, or the like. These and similar terms may be associated with the appropriate physical quantities and are merely convenient labels applied to these quantities. Unless specifically stated otherwise as apparent from the following discussion, it is appreciated that, throughout the description, discussions using terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

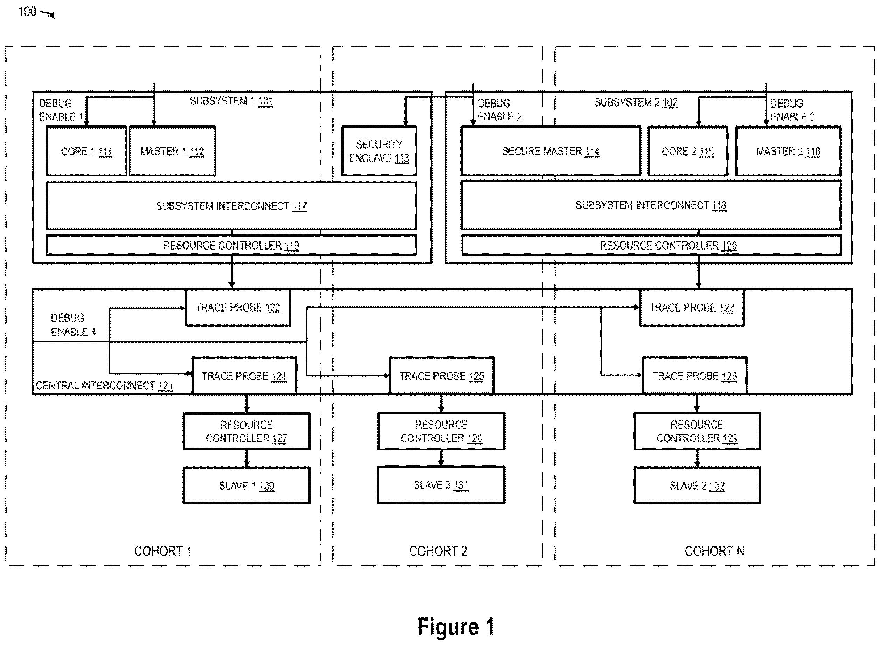

To provide a contextual understanding of the present disclosure, reference is now made to Figure 1 which depicts a simplified schematic block diagram of a zonal controller SoC processing system 100 which employs a conventional debug architecture. As will be appreciated, the SoC processing system 100 may include one or more initiator elements and target elements for storing and executing software code (e.g., hypervisor and other application software) to provide two more virtual machines or subsystems 101, 102 which are directly or indirectly connected over the central interconnect 121 to communicate with the remote peripherals 130-132 access controlled via resource controllers 127-129. In order to obtain virtualization subsystems which are used by zonal architectures to obtain efficiency and scalability, multiple initiator devices 112, 116 in different applications running on the SoC system 100 access different resources 130-132 through the central interconnect 121.

As depicted, the zonal controller processing system 100 employs an SoC architecture wherein a plurality of n different zonal devices or "cohorts" (Cohorts 1-n) having shared or dedicated subsystem resources are connected over a common central interconnect or crossbar 121. For example, a first cohort (Cohort 1) includes initiator resources (e.g., at least a first processor core 111, a first initiator 112, a shared subsystem interconnect 117, and a shared initiator resource controller 119) which are coupled over the central interconnect 121 to the target resources (e.g., a first resource controller 127 and first target device 130). In addition, a second cohort (Cohort 2) includes initiator resources (e.g., a security enclave 113, a shared secure initiator 114, shared subsystem interconnects 117, 118, and shared initiator resource controllers 119, 120) which are coupled over the central interconnect 121 to the target resources (e.g., a second resource controller 128 and second target device 131). In addition, a third cohort (Cohort 3) includes initiator resources (e.g., at least a shared secure initiator 114, second processor core 115, a second initiator 116, a shared subsystem interconnect 118, and a shared initiator resource controller 120) which are coupled over the central interconnect 121 to the target resources (e.g., a third resource controller 129 and third target device 132). With the arrangement, the initiator resources are connected directly or indirectly to the central interconnect 121 to communicate with the target resource controllers 127-129 so that any data flowing from the initiator resources to the target resources is through the central interconnect 121. And in normal operation, each cohort is isolated from the other cohorts by the resource controllers 119-120, 127-129 so that no cohort should be able to see the data from any other cohort until needed.

To enable trace-based debugging, hardware debug instruments (not shown) are included at the initiator and target resources where they may be separately enabled with debug enable control signals (e.g., Debug Enable 1-3). In addition, the central interconnect or crossbar 121 includes initiator trace probes 122-123 and target trace probes 124-126 which share a common debug enable signal Debug Enable 4 for the entire central interconnect 121. As a result, if a first cohort (e.g., Cohort 1) is performing trace-based debugging on its initiator and target resources, the first debug enable signal Debug Enable 1 would be set to enable the first processor core 111 and first initiator 112, and the fourth debug enable signal Debug Enable 4 would be set to enable the trace probes 122, 123. However, because the common debug enable signal (Debug Enable 4) also enables the other central interconnect trace probes 123, 125, 126, all of these trace probes become visible to the first Cohort 1 which could program all the trace probes 122-126, regardless of whether belong to the first Cohort 1. As a result, the first Cohort 1 could configure the trace probes 124, 125, 126 to see the data flowing through the central interconnect 121 from the initiators or to the targets of the other cohorts. Additionally, data flowing from trace probes 122 and 123 could belong to different cohorts in case of a shared initiator. Therefore, the first Cohort 1 can trace out that data even when it is isolated from other cohorts and unauthorized to do so.

Another problem with having a common debug enable signal applied to the central interconnect trace probes arises when there are multiple cohorts sharing a secure initiator (e.g., 114), but not all cohorts are authorized to access secure data at the secure initiator 114. In an example case where a security enclave 113 is a pre-configured hardware security subsystem having a dedicated security core, internal ROM, and secure RAM for storing and processing secure data, the second secure cohort (e.g., Cohort 2) is authorized to store and access the secure data. However, the security problem arises when a non-secure cohort (e.g., Cohort 1 or Cohort 3) is authenticated and sets the common debug enable signal for the central interconnect 121, at which time the non-secure cohort could trace out security data from the security enclave 113 that was intended for use by a secure cohort (e.g., Cohort 2).

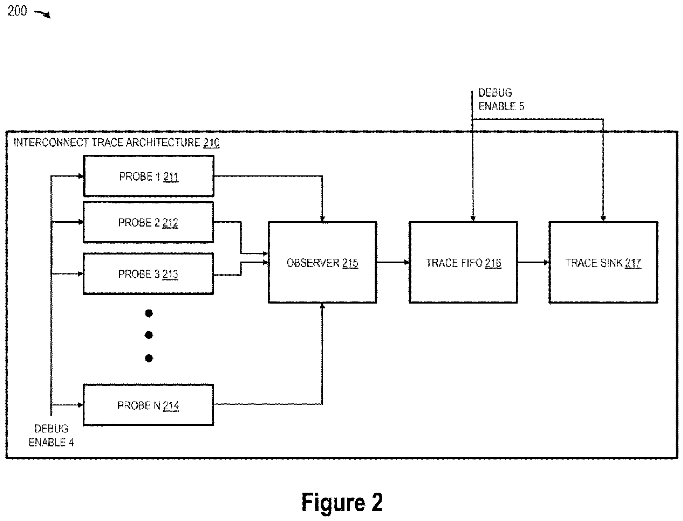

To provide additional contextual understanding of the present disclosure, reference is now made to Figure 2 which depicts an SoC system 200 having an interconnect trace architecture 210 in which a plurality of trace probes 211-214 are connected to a shared observer 215, which in turn feeds a trace FIFO 216 and trace sink 217 from which data can be read by the debugger application. As depicted, the probes 211-214 are each enabled by a common debug enable signal (DEBUG ENABLE 4). In addition, the trace FIFO 216 and trace sink 217 share a common debug enable signal (DEBUG ENABLE 5). In situations where the interconnect trace components 211-214 share a common trace sink 217 for multiple cohorts, data flowing from all the cohorts are coming to a common trace sink 217. As a result, if a single cohort enables the probes 211-214 for debug access, another cohort can access the trace sink 217 to trace the data out from all the other cohorts. Therefore, in case of isolation, any cohort can trace the traffic of any other cohort through the common interconnect. In similar fashion, any secure initiator from any subsystem can be traced by the non-secure application over the interconnect.

As seen from the foregoing, there are conflicts and tradeoffs between enforcing security of a system-on-chip (SoC) and providing observability during trace-based debugging. On one hand, security objectives require that assets remain confidential at different stages of the SoC life cycle. On the other hand, the trace-based debug infrastructure exposes values of internal signals that can leak the assets to untrusted third parties. To address the foregoing deficiencies and others known to those skilled in the art, there is disclosed herein a secure trace-based debug infrastructure, method, apparatus, system, and architecture which enables secure debug tracing at a common or central interconnect circuit with a built-in firewall logic at each interconnect trace probe which applies a filter that is configured to compare cohort ID values from trace configuring cores against an incoming packet cohort ID value that is assigned by the resource controller for the interconnect trace probe. The secure infrastructure assigns a cohort ID value to each initiator so that debug firewall control logic at each interconnect trace probe can identify which cohort the initiator belongs to (to whom it can be exposed during debug), and non-intrusively enforces the security of the interconnect trace probe during runtime debug by comparing CID value of an incoming packet with the CID value of any core which attempts to configure the interconnect trace probe and enabling the trace only if there is a match.

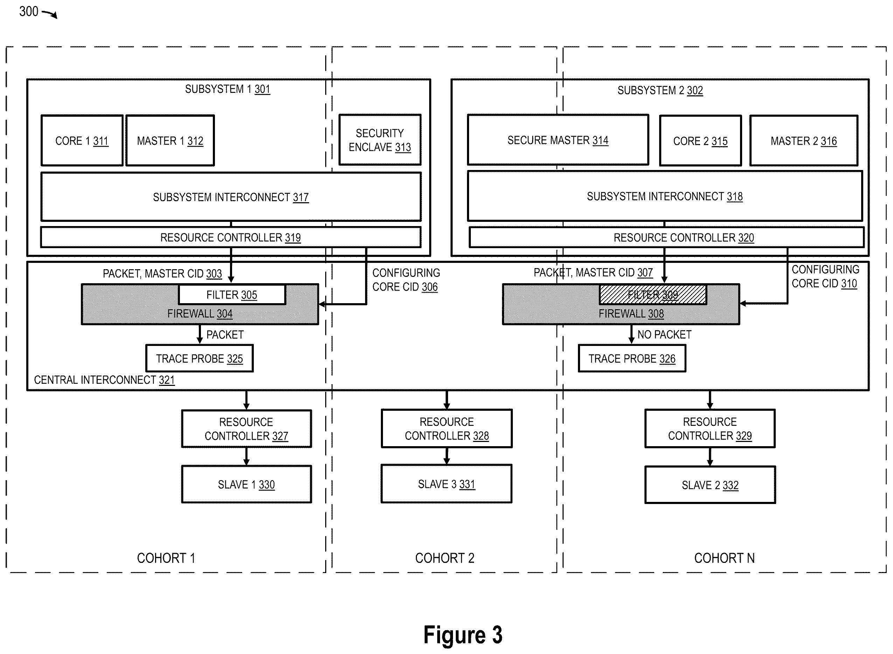

To provide an improved understanding of selected embodiments of the present disclosure, reference is now made to Figure 3 which depicts a simplified schematic block diagram of a zonal controller SoC processing system 300 with a debug architecture which uses a Cohort ID (CID) based trace packet filtering mechanism. As will be appreciated, the SoC processing system 300 is similar to SoC processing system 100 depicted in Figure 1 in that it includes one or more processor elements and memory for storing and executing software code to provide multiple virtual machines or subsystems 301, 302 which are directly or indirectly connected over the central interconnect 321 to communicate via resource controllers 327-329 to the remote peripherals 330-332. As illustrated, the SoC processing system 300 is divided into a plurality of n different zonal devices or "cohorts" (Cohorts 1-n), each having shared or dedicated subsystem resources, including "master" devices (e.g., 311-320) which are connected over a common central interconnect or crossbar 321 to the "slave" devices (e.g., 327-332). In particular, a first cohort (Cohort 1) includes initiator resources (e.g., at least a first processor core 311, a first initiator 312, a shared subsystem interconnect 317, and a shared initiator resource controller 319) which are coupled over the central interconnect 321 to the target resources (e.g., a first resource controller 327 and first target device 330). In addition, a second cohort (Cohort 2) includes initiator resources (e.g., a security enclave 313, a shared secure initiator 314, shared subsystem interconnects 317, 318, and shared initiator resource controllers 319, 320) which are coupled over the central interconnect 321 to the target resources (e.g., a second resource controller 328 and second target device 331). In addition, a third cohort (Cohort 3) includes initiator resources (e.g., at least a shared secure initiator 314, a second processor core 315, a second initiator 316, a shared subsystem interconnect 318, and a shared initiator resource controller 320) which are coupled over the central interconnect 321 to the target resources (e.g., a third resource controller 329 and third target device 332). With the arrangement, the initiator resources are connected directly or indirectly to the central interconnect 321 to communicate with the target resource controllers 327-329 so that any data flowing from the initiator resources to the target resources is through the central interconnect 321. And in normal operation, each cohort is isolated from the other cohorts by the resource controllers 319-320, 327-329 so that no cohort should be able to see the data from any other cohort until needed.

Instead of having each trace probe enabled by a common debug enable signal, each trace probe in the central interconnect 321 includes its own trace packet filtering mechanism which is separately configured by a configuring core which provides a configured CID (CCID) value that is latched and applied by the trace packet filtering mechanism so that packets from any requesting cohort can only be traced out to the trace probe if the packet includes a CID value that matches the CCID value that is set at the filtering mechanism, thereby preventing another application running on a different cohort (and having a different CID value) from using the trace probe. Whether integrated into each interconnect trace probe or added as a placeholder on top of each trace probe, the CID-based filtering function can be implemented within firewall control logic which compares the CID and CCID values. For example, the central interconnect 321 includes a firewall 304 on top of the trace probe 325 which provides a CID-based trace packet filtering mechanism 305 which is connected and configured to prevent another application running on current cohort from using trace 325 to snoop trace packets from different cohorts. To this end, the filtering mechanism 305 is connected and latched with a CCID value 306 from a cohort (e.g., Cohort 1) which configures the trace probe 325, and is operative to compare the CCID value 306 against a CID value 303 from any packet received from the resource controller 319 or any other subsystem resource, where the CID value 303 specifies which cohort is sending the packet. If the filtering mechanism 305 determines there is a match between the CCID 306 and the CID 303, the firewall 305 sends the packet 303 to the trace probe 325, thereby enabling the Cohort 1 which sent the packet 303 to trace out the data packet from the trace probe 325.

To illustrate the protective function provided by the CID-based filtering function when there is not a match between CID values, reference is now made to the firewall 308 on top of the trace probe 326. As depicted, the firewall 308 includes a CID-based trace packet filtering mechanism 309 which is connected to be configured with a CCID value 310 by a configuring core that configures the trace probe 326, and to compare the CCID value 310 against a CID value 307 contained in a data trace packet 307 provided by a requesting core (e.g., Secure Master 314 in Cohort 2). In the event the CID-based trace packet filtering mechanism 309 does not detect a match between the CCID value 310 and CID value 307, the firewall 308 prevents the requesting cohort's packet 307 from being sent to the trace probe 326, thereby preventing the requesting cohort from tracing out the data packet 307 when there is not a match.

Though target trace probes are not separately depicted in the central interconnect 321, it will be appreciated that any target (or slave) trace probe may also include firewall control logic which implements a CID-based filtering function by performing a matching comparison of the CCID value against a target CID value contained within requesting cohort's packet.

To provide an additional level of security protection against improper access to interconnect trace probes, the SoC debug architecture disclosed herein may also perform filtering based on secure transactions to prevent secure initiators from any cohort subsystem from being traced by the non-secure application over the interconnect. Such an enhanced security protection is provided by configuring each cohort with a secure trace enable bit which can only be configured by the security enclave for that cohort. At each firewall that is located at an interconnect trace probe, control logic may be included to provide a secure trace enable multiplexer (STEM) circuit which is connected to multiplex the secure trace enable bits from all of the cohorts together under control of a CCID value that provides the multiplex selection signal, thereby generating a common secure trace enabled signal. If the secure trace enable bit for a cohort indicates that secure packet tracing is enabled for the cohort, then the requesting cohort's secure packet whose CID value matches the CCID value is sent to the trace probe. But if the secure trace enable bit for a cohort indicates that secure packet tracing is not enabled for the cohort, secure packet tracing is disabled, and only unsecure packets are sent to the trace probes.

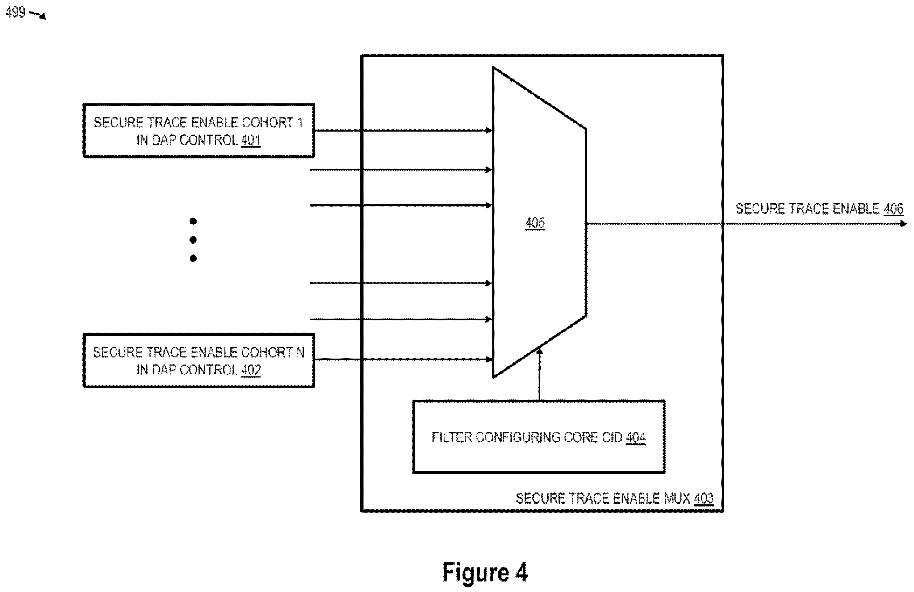

For an improved understanding of selected embodiments of the present disclosure, reference is now made to Figure 4 which depicts a simplified schematic circuit block diagram 400 of a secure trace enable multiplexer (STEM) circuit 403 which may be included in the firewall control logic for each interconnect trace probe. As depicted, the STEM circuit 403 includes a MUX circuit 405 which is connected to receive secure trace enable bit inputs 401-402 from all the cohorts (Cohorts 1-N). Based on the select signal provided by the filter-configuring CCID value 404, the MUX circuit 405 outputs the secure trace enable 406.

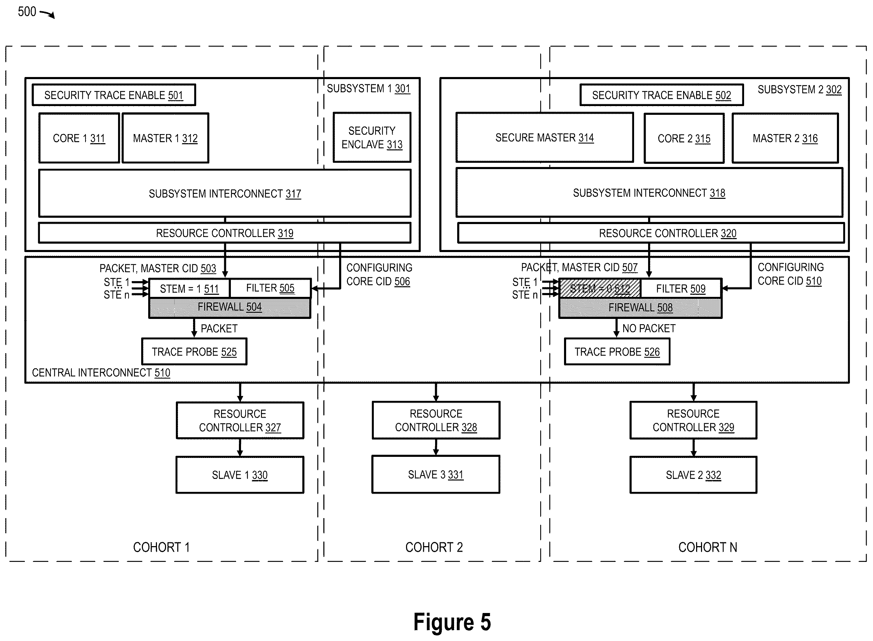

To illustrate an example embodiment for implementing the STEM circuit in the firewall control logic for each interconnect trace probe, reference is now made to Figure 5 which depicts a simplified schematic block diagram of a zonal controller SoC processing system 500 with a debug architecture which uses a CID-based trace packet filtering mechanism and secure trace enable multiplexer to enable dynamic switching of secure trace enables between different cohorts. As will be appreciated, the SoC processing system 500 is similar to SoC processing system 300 depicted in Figure 3 in that it includes one or more initiator and targets for storing and executing software code to provide multiple virtual machines or subsystems 301, 302 which are directly or indirectly connected over the central interconnect 510 to communicate via resource controllers 327-329 to the remote peripherals 330-332. As illustrated, the SoC processing system 500 is divided into a plurality of n different zonal devices or "cohorts" (Cohorts 1-n), each having shared or dedicated subsystem resources, including "master" devices (e.g., 311-320) which are connected over a common central interconnect or crossbar 510 to the "slave" devices (e.g., 327-332).

At the central interconnect 510, each trace probe 525, 526 is separately and securely enabled by firewall control logic 504, 508 which includes a CID-based trace packet filtering mechanism 505, 509 which selectively enables packets from a cohort having a CID value to be traced out to the trace probe only when the CID value matches a configured CCID value at the filtering mechanism 505, 509, thereby preventing packets from other applications to be traced by this cohort. For example, the firewall 504 on top of the initiator trace probe 525 provides a CID-based trace packet filtering mechanism 505 which is connected and configured to receive and store a CCID value 506 from a core at a specified cohort which is seeking to configure the trace probe 525. Once the CCID value 506 is latched, the CID-based trace packet filtering mechanism 505 is operative to receive a data trace packet 503 from a first cohort (e.g., Cohort 1) which seeks to transmit the packet 503 to the trace probe 525, and to compare the CCID value 506 against a CID value 503 contained within the packet 503. If the filtering mechanism 505 determines there is a match between the CID 506 and the CID 503, the firewall 504 sends the packet 503 to the trace probe 525, thereby enabling the requesting cohort to trace out the packet 503 to the trace probe 525. However, if there is not a match detected by the CID-based trace packet filtering mechanism 505, the firewall 504 prevents the packet 503 from being sent to the trace probe 525, thereby preventing the requesting cohort from tracing out the packet 503.

In addition to including CID-based trace packet filtering mechanisms 505, 509, each trace probe 525, 526 may include an additional level of security protection against unsecure access by having selected cohorts (e.g., Cohort 1, Cohort 2) specify a secure trace enable bit 501, 502 which is configured by a security enclave 313 to indicate if the associated cohort has permission to trace out secure packets to the trace probe 525, 526. In addition, the firewall control logic 504, 508 at each cohort also includes a secure trace enable multiplexer (STEM) circuit 511, 512 which is connected and configured to receive the secure trace enable bit values for different cohorts. Based on the CCID value 506, 510 that is used as a MUX select signal, the STEM circuit 511, 512 sends out the secure trace enable signal for a cohort which is requesting to trace out a packet 503, 507. If the output from the STEM circuit 511 is set (e.g., STEM = 1) and the requesting cohort is allowed to trace out the secure packets (e.g., MASTER CID 503 = CCID 506), then the requesting cohort is allowed to trace out the packet 503 to the trace probe 525. On the other hand and as illustrated with the firewall control logic 508 for the trace probe 526 at Cohort N, if the secure trace enable bit 502 indicates that secure packet tracing is disabled, then the output from the STEM circuit 512 is 0 so that only unsecure packets (CID security bit = 0) are sent to the trace probe 526, provided that the requesting cohort is allowed to trace out the packet 507 (e.g., MASTER CID 507 = CCID 510).

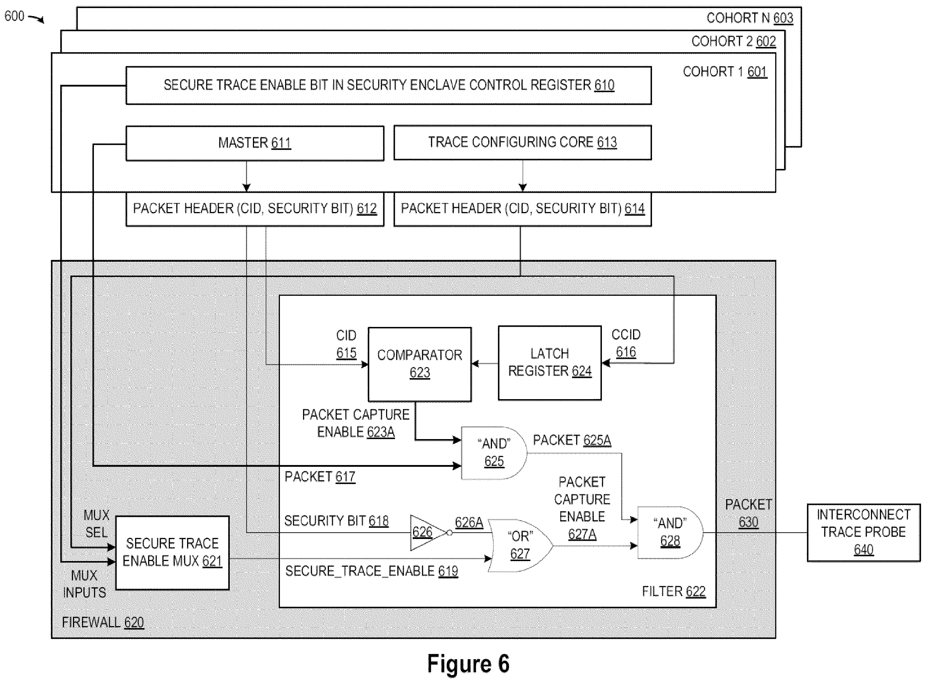

To provide additional details for an improved understanding of selected embodiments of the present disclosure, reference is now made to Figure 6 which depicts a simplified schematic circuit block diagram 600 of firewall control logic 620 connected between the SoC cohorts 601-603 and an interconnect trace probe 640. As depicted, each cohort (Cohort 1-N) 601-603 may include initiator resources, such as a first core or initiator 611 and a trace configuring core 613. Each cohort also includes a secure trace enable bit 610 which may be set by the security enclave and stored in a control register in the security enclave to indicate if the cohort is enabled to send secure packets. And for each interconnect trace probe 640, the corresponding firewall control logic 620 includes a secure trace enable multiplexer 621 and filter 622 which are connected and configured to securely enable traces over a common interconnect bus.

In the disclosed firewall 620, the filter 622 includes a comparator 623, latch register 624, and first logical "AND" gate 625 connected as shown to provide a CID-based trace packet filtering mechanism to prevent packet tracing from other cohorts. In addition, the filter 622 includes a "NOT" gate 626, first logical "OR" gate 627, and second logical "AND" gate 628 connected as shown to provide a security-bit based trace packet filtering mechanism for dynamically switching secure packets between cohorts. In particular, the comparator 623 is connected to latch a received CCID value 616 at the latch register 624 from the packet header 614 generated by the trace configuring core 613. In addition, the comparator 623 is connected to receive a CID value 615 from the packet header 612 that the initiator 611 is requesting to be sent to the interconnect trace probe 640. Based on a comparison of the incoming CID value 615 and latched CCID value 616, the comparator 623 generates the packet capture enable signal 623A which indicates if there is a match.

At the first logical "AND" gate 625, the packet capture enable signal 623A is logically combined with the incoming n-bit packet 617 generated by the initiator 611. If the packet capture enable signal 623A from the comparator 623 confirms a match (e.g., packet_capture_enable = "1"), then the first logical "AND" gate 625 sends out the incoming packet 617 as an output packet 625A. However, if there is not a match detected at the comparator 623 (e.g., packet_capture_enable = "0"), then packet capture enable signal 623A prevents the first logical "AND" gate 625 from transferring the incoming packet 617 to the output 625A. In selected embodiments, the packet output 625A from the first logical "AND" gate 625 may be provided directly to the interconnect trace probe 640.

To provide additional security protection, the disclosed firewall 620 also includes a secure trace enable multiplexer 621, a "NOT" gate 626, first logical "OR" gate 627, and second logical "AND" gate 628. In particular, the secure trace enable multiplexer 621 is connected to receive the secure trace enable bits for each of the cohorts 601-603 as multiplexer inputs. In addition, the secure trace enable multiplexer 621 receives the CCID value from the packet header 614 as a multiplex select signal (MUX SEL). In response to the multiplex select signal (MUX SEL), the secure trace enable multiplexer 621 selects one of the multiplexer inputs for output as the secure trace enable signal 619.

At the first logical "OR" gate 627, the secure trace enable signal 619 is logically combined with the inverted security bit from the packet header 612 generated by the initiator 611. In particular, the "NOT" gate 626 is connected to receive the security bit 618 from the packet header 612, and to generate the inverted security bit 626A. At the first logical "OR" gate 627, the inverted security bit 626A and the secure trace enable signal 619 from the STEM 621 are logically combined to provide a packet capture enable signal 627A for input to the second logical "AND" gate 628 which is also connected to receive the packet output 625A from the first logical "AND" gate 625. If the secure trace enable bit 610 for Cohort 1 601 is "1" and is selected by the secure trace enable multiplexer 621, then the secure trace enable MUX 621 outputs the secure trace enable signal 619 as a "1" to indicate that Cohort 1 is enabled to trace out secure packets. And if the security bit 618 indicates that the incoming packet 612 is a secure packet (e.g., SECURITY BIT = 1), then the first logical "OR" gate 627 outputs a packet capture enable signal 627A that is set to "1" for input to the second logical "AND" gate 628 which allows the packet 625A to be traced out as a trace packet 630 to the interconnect trace probe 640. However, if security bit 618 indicates that the incoming packet 612 is a secure packet (e.g., SECURITY BIT = 1) and the secure trace enable signal 619 for the requesting cohort is set to "0" to indicate that the requesting cohort is not enabled to send secure packets, then the first logical "OR" gate 627 outputs a packet capture enable signal 627A that is set to "0" for input to the second logical "AND" gate 628 which prevents the packet 625A from being traced out as a trace packet 630 to the interconnect trace probe 640.

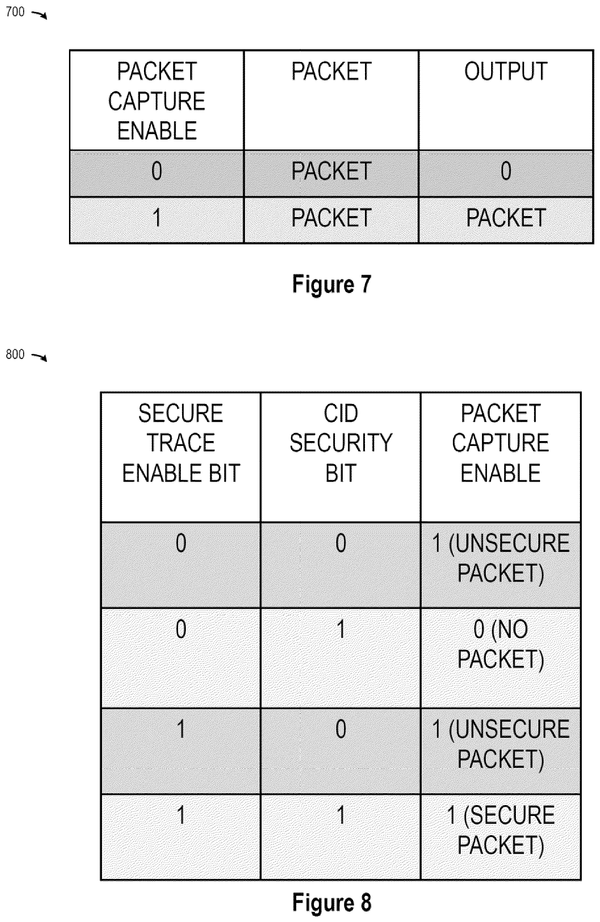

For an improved understanding of selected embodiments of the present disclosure, reference is now made to Figure 7 which is a truth table 700 for the first n-bit "AND" gate component 625 in the probe filter 622, where the Packet Capture Enable values correspond to the output 623A from the comparator 623, and where the Packet values (PACKET) are the incoming n-bit packet 617 generated by the initiator 611. As shown, the output from the first n-bit "AND" gate component 625 is blocked ("0") when the Packet Capture Enable value is "0," and is passed when the Packet Capture Enable value is "1."

For an improved understanding of selected embodiments of the present disclosure, reference is now made to Figure 8 which is a truth table 800 for the first "OR" gate component 627 in the probe filter 622, where the Secure Trace Enable Bit values are outputs from the secure trace enable multiplexer 621, and where the CID Security Bit values are the CID value from the incoming n-bit packet 612 generated by the initiator 611. As shown, the output from the first "OR" gate component 627 is blocked ("0") when the Packet Capture Enable value is "0," and is passed when the Packet Capture Enable value is "1,"

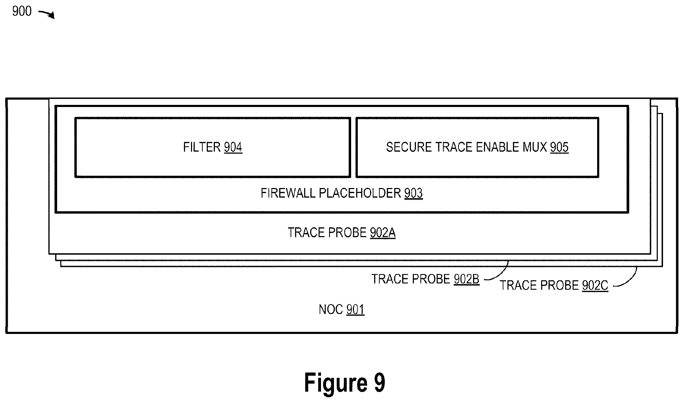

For an improved understanding of selected embodiments of the present disclosure, reference is now made to Figure 9 which illustrates a simplified block diagram 900 of a design implementation of a Network on Chip (NoC) 901 having a plurality of trace probes 902A-C, each including firewall placeholder 903 which has a filter 904 and a secure trace enable multiplexer (STEM) 905. As illustrated, the NOC 901 may be implemented as an SoC central interconnect or crossbar which includes a plurality of initiator and target trace probes 902A-C. In addition, the disclosed firewall placeholder 903 is located on top of each trace probe (e.g., 902A), and may include the filter 904 which implements a Cohort ID (CID) based trace packet filtering control logic as described hereinabove. The disclosed firewall placeholder 903 may also implement the secure trace enable multiplexer 905 with any suitable multiplexer circuit which is connected and configured to receive and select between secure trace enable bits from multiple cohorts in response to a multiplex select signal (MUX SEL). By adding the firewall placeholder 903 to each trace probe, the trace path is independent of the actual data path in the NOC 901, and does not impact any interconnect functionality.

As seen from the foregoing, there are a number of advantages of the disclosed trace probe security protection mechanism. First, the provision of a firewall with cohort ID-based filtering at each interconnect trace probe solves the problem of trace data exposure with multiple cohorts sharing a common interconnect on a zonal device since the CID-based filtering effectively keeps the data confined to the appropriate cohort. And by providing each firewall with a secure trace enable multiplexer, a secure trace gateway is provided for security modules which protects device security by preventing the exposure of keys/encrypted/decrypted data to any unsecure application via an interconnect trace. In addition, the provision of firewall isolation at the trace interface is a key feature of zonal architecture designs. Another benefit arises in situations where there is switching of debugging cohorts since the disclosed firewall prevents a new cohort from being able to trace the data from previous debug session until it reconfigures the trace probes. In particular, in a situation where there is dynamic switching between two cohorts which were authenticated at the same time, the new cohort will not be able to trace out the data from the other one, even though it was authenticated at the same time, thereby providing additional isolation.

By now, it should be appreciated that there has been provided herein a multi-processor system-on-chip (SOC) method, apparatus, and system for providing secure tracing based on isolation of software-based devices. As disclosed, the SoC apparatus includes a plurality of subsystems, where each subsystem includes one or more initiators, targets, and processing cores. The initiators and targets in the subsystems are allocated amongst a plurality of cohorts or "zonal" devices. To this end, each of the plurality of cohorts is assigned a corresponding CID value by a resource controller. The SoC apparatus also includes a central interconnect fabric connected between one or more initiators and one or more targets, where the central interconnect fabric includes one or more debug trace probes for connection to a debugger. As disclosed, each debug trace probe is connected with debug firewall control logic disposed to allow a data trace packet from a first cohort to be traced out to the debug trace probe only if the data trace packet includes a cohort identification (CID) value associated with the first cohort that matches a configuring cohort identification (CCID) value associated with a configuring cohort which configures the debug trace probe. In selected embodiments, the debug firewall control logic also includes a cohort identification register which is used by the debug firewall control logic to latch the CCID value during configuration of the debug trace probe by the configuring cohort. In other selected embodiments, the debug firewall control logic for each debug trace probe includes a filter connected and configured to compare (1) the CCID value associated with the configuring cohort which configures the debug trace probe, and (2) the CID value associated with the first cohort which requests that the data trace packet from the first cohort be traced out to the debug trace probe. In selected embodiments, the filter for each debug trace probe includes a comparator and a first pass gate. The comparator has a first comparator input connected to receive the CCID value from a latch register that is configured by the configuring cohort, and has a second comparator input connected to receive the CID value from an initiator resource controller associated with the first cohort. Based on these inputs, the comparator is configured to generate a first packet capture enable signal when there is a match between the CCID value and the CID value. In response to the first packet capture enable signal, the first pass gate is configured to pass the data trace packet received from the initiator resource controller associated with the first cohort. In other embodiments, the debug firewall control logic for each debug trace probe also includes a secure trace enable multiplexer connected to the packet capture control logic which is configured to output a second packet capture enable signal indicating whether the data trace packet is a secure packet or unsecure packet. In such embodiments, the secure trace enable multiplexer is connected to receive a plurality of secure trace enable bits from for the plurality of cohorts and to output a first secure trace enable signal to the packet capture control logic under control of a multiplexer select signal. In selected embodiments, the configuring cohort and the first cohort are the same cohort. In other embodiments, the configuring cohort and the first cohort are different cohorts.

In another form, there is provided a processing system, apparatus, and apparatus for providing secure tracing based on isolation of software-based devices. As disclosed, the processing system includes an interconnect having one or more debug trace probes for connection to a debugger. The disclosed processing system also includes an initiator processing device including processing cores coupled to the interconnect. In addition, the disclosed processing system includes a hypervisor coupled to the interconnect and configured to allocate the processing cores to a plurality of virtual machines, each virtual machine have a unique cohort identification (CID) value. The disclosed processing system also includes a plurality of target devices coupled to the interconnect. In addition, the disclosed processing system includes debug trace packet filtering control logic disposed on each debug trace probe to allow a data trace packet from a first cohort to be traced out to the debug trace probe only if the data trace packet includes a cohort identification (CID) value associated with the first cohort that matches a configuring cohort identification (CCID) value associated with a configuring cohort which configures the debug trace probe. In selected embodiments, the debug trace packet filtering control logic for each debug trace probe includes a filter connected and configured to compare (1) the CCID value associated with the first cohort which configures the debug trace probe, and (2) the CID value associated with the requesting cohort which requests that the data trace packet from the first cohort be traced out to the debug trace probe. In such embodiments, the filter for each debug trace probe includes a comparator configured to generate a first packet capture enable signal when there is a match between the first and second CID values, where a first comparator input is connected to receive the first CID value from a latch register that is configured by the first cohort and where a second comparator input is connected to receive the second CID value from a resource controller associated with the requesting cohort. In addition, the filter includes a first pass gate configured to pass the data trace packet received from the resource controller associated with the requesting cohort in response to the first packet capture enable signal. In selected embodiments, the debug trace packet filtering control logic for each debug trace probe also includes a secure trace enable multiplexer connected to packet capture control logic which is configured to output a second packet capture enable signal indicating whether the data trace packet is a secure packet or unsecure packet. In such embodiments, the secure trace enable multiplexer is connected to receive a plurality of secure trace enable bits for the plurality of virtual machines and to output a first secure trace enable signal to the packet capture control logic under control of a multiplexer select signal, where each secure trace enable bit indicates if a corresponding virtual machine is authorized to send a secure data trace packet.

In yet another form, there is provided a multicore system on chip (SoC), apparatus, and method of operation for providing secure tracing based on isolation of software-based devices. As disclosed, the method includes running, during startup and bootup of the multicore SoC, a hypervisor on the multicore SoC to allocate the one or more initiator devices and the one or more target devices to a plurality of virtual machines, and to assign each virtual machine a unique cohort identification (CID) value. In addition, the disclosed method includes configuring, by a first virtual machine, a first debug trace packet filter connected to control access to a first debug trace probe in the interconnect fabric by latching a first CID value associated with first virtual machine into a first latch register of the first debug trace packet filter. In selected embodiments, configuring the first debug trace packet filter includes storing the first CID value at a latch in the first debug trace packet filter The disclosed method also includes receiving, at the first debug trace packet filter, a first data trace packet that is sent by a first initiator device for delivery to the first debug trace probe. In addition, the disclosed method includes evaluating, at the first debug trace packet filter, a second CID value included in the first data trace packet against the first CID value. In selected embodiments, evaluating the second CID value against the first CID value includes comparing, at the first debug trace packet filter, the first CID value to the second CID value. In such embodiments, evaluating the second CID value against the first CID value also includes comparing, at the first debug trace packet filter, the first CID value to the second CID value. The disclosed method also includes allowing, by the first debug trace packet filter, the first data trace packet to be traced out to the first debug trace probe only if the first CID value matches the second CID value. In selected embodiments, allowing the first data trace packet to be traced out includes supplying the first packet capture enable signal to a first pass gate at the first debug trace packet filter which is configured to pass the first data trace packet in response to the first packet capture enable signal. In other selected embodiments, the disclosed method includes selecting, at a first multiplexer circuit, one of a plurality of security trace enable bit values corresponding to the plurality of virtual machines for output as a second packet capture enable signal, where each secure trace enable bit indicates if a corresponding virtual machine is authorized to send a secure data trace packet. In such embodiments, the first debug trace packet filter evaluates a first security bit value included in the first data trace packet against second packet capture enable signal indicating whether the first data trace packet is a secure data trace packet or an unsecure data trace packet. In addition, the first debug trace packet filter allows the first data trace packet to be traced out to the first debug trace probe as a secure data trace packet only if the first security bit value matches the second packet capture enable signal.

Some of the above embodiments, as applicable, may be implemented using a variety of different data processing systems. For example, although Figures 3-9 and the discussion thereof describe exemplary embodiments for an SoC data processing system and architecture, they are presented merely to provide a useful reference in discussing various aspects of the invention. As will be appreciated, the depiction in the figures has been simplified for purposes of discussion, and a variety of other types of architectures may be used in accordance with the present disclosure. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

In addition, the example SoC system embodiments illustrated in Figures 3-9 may be implemented with circuitry located on a single integrated circuit or within a same device. Furthermore, those skilled in the art will recognize that boundaries between the functionality of the above-described operations merely illustrative. The functionality of multiple operations may be combined into a single operation, or the functionality of a single operation may be distributed in additional operations. Moreover, alternative embodiments may include multiple instances of a particular operation, and the order of operations may be altered in various other embodiments.

An apparatus and method are disclosed for a System on Chip (SoC) which includes a central interconnect fabric connected between a plurality of initiators and targets, where the central interconnect includes one or more debug trace probes for connection to a debugger, where each debug trace probe is connected with debug firewall control logic configured to allow a data trace packet from a first cohort to be traced out to the debug trace probe only if the data trace packet includes a CID value associated with the first cohort that matches a CCID value associated with a configuring cohort which configures the debug trace probe, and where the debug firewall control logic includes a secure trace enable multiplexer connected to packet capture control logic which is configured to output a packet capture enable signal indicating whether the data trace packet is a secure packet or unsecure packet.

All or some of the software described herein may be received from elements of the SoC system, such as, for example, from computer readable media or other storage media or memory on other computer systems. Such computer readable media may be permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

In selected embodiments, the SoC systems disclosed herein are part of a computer system such as an embedded microcontroller. Other embodiments may include different types of computer systems. Computer systems are information handling systems which can be designed to give independent computing power to one or more users. Computer systems may be found in many forms. A typical computer system includes at least one processing unit, associated memory and a number of input/output (I/O) devices.

A computer system processes information according to a program and produces resultant output information via I/O devices. A program is a list of instructions such as a particular application program and/or an operating system. A computer program is typically stored internally on computer readable storage medium or transmitted to the computer system via a computer readable transmission medium. A computer process typically includes an executing program or portion of a program, current program values and state information, and the resources used by the operating system to manage the execution of the process. A parent process may spawn other, child processes to help perform the overall functionality of the parent process. Because the parent process specifically spawns the child processes to perform a portion of the overall functionality of the parent process, the functions performed by child processes (and grandchild processes, etc.) may sometimes be described as being performed by the parent process.

The term "program," as used herein, is defined as a sequence of instructions designed for execution on a computer system. A program, or computer program, may include a subroutine, a function, a procedure, an object method, an object implementation, an executable application, an applet, a servlet, a source code, an object code, a shared library/dynamic load library and/or other sequence of instructions designed for execution on a computer system.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. The term "coupled," as used herein, is not intended to be limited to a direct coupling or a mechanical coupling. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. And unless stated otherwise, terms such as "first" and "second" are used to arbitrarily distinguish between the elements such terms describe. Thus, these terms are not necessarily intended to indicate temporal or other prioritization of such elements.

Although the described exemplary embodiments disclosed herein are directed to various embodiments, the present invention is not necessarily limited to the example embodiments which illustrate inventive aspects of the present invention that are applicable to a wide variety of SoC systems and operational methodologies. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

## Claims

1. A system on chip (SoC) apparatus, comprising:
a plurality of subsystems, each subsystem comprising one or more initiators, one or more targets, and one or more processing cores; and
a central interconnect fabric connected between the one or more initiators and the one or more targets, where the central interconnect fabric comprises one or more debug trace probes for connection to a debugger,
where the one or more initiators and one or more targets in the plurality of subsystems are allocated amongst a plurality of cohorts; and
where each debug trace probe is connected with debug firewall control logic disposed to allow a data trace packet from a first cohort to be traced out to the debug trace probe only if the data trace packet includes a cohort identification (CID) value associated with the first cohort that matches a configuring cohort identification (CCID) value associated with a configuring cohort which configures the debug trace probe.

2. The SoC apparatus of claim 1, where the debug firewall control logic further comprises a cohort identification register which is used to latch the CCID value during configuration of the debug trace probe by the configuring cohort.

3. The SoC apparatus of any preceding claim, where each of the plurality of cohorts is assigned a corresponding CID value by a resource controller.

4. The SoC apparatus of any preceding claim, where the debug firewall control logic for each debug trace probe comprises a filter connected and configured to compare:
(1) the CCID value associated with the configuring cohort which configures the debug trace probe, and
(2) the CID value associated with the first cohort which requests that the data trace packet from the first cohort be traced out to the debug trace probe.

5. The SoC apparatus of claim 4, where the filter for each debug trace probe comprises:
a comparator configured to generate a first packet capture enable signal when there is a match between the CCID value and the CID value, where a first comparator input is connected to receive the CCID value from a latch register that is configured by the configuring cohort and where a second comparator input is connected to receive the CID value from an initiator resource controller associated with the first cohort; and
a first pass gate configured to pass the data trace packet received from the initiator resource controller associated with the first cohort in response to the first packet capture enable signal.

6. The SoC apparatus of any preceding claim, where the debug firewall control logic for each debug trace probe further comprises a secure trace enable multiplexer connected to packet capture control logic which is configured to output a second packet capture enable signal indicating whether the data trace packet is a secure packet or unsecure packet.

7. The SoC apparatus of claim 6, where the secure trace enable multiplexer is connected to receive a plurality of secure trace enable bits for the plurality of cohorts and to output a first secure trace enable signal to the packet capture control logic under control of a multiplexer select signal.

8. The SoC apparatus of any preceding claim, where the configuring cohort and the first cohort are the same cohort.

9. The SoC apparatus of any preceding claim, where the configuring cohort and the first cohort are different cohorts.

10. A method of controlling data trace packet access to one or more debug trace probes on an interconnect fabric connected between the one or more initiator devices and the one or more target devices located on a multicore system on chip (SoC), comprising:
during startup and bootup of the multicore SoC, running a hypervisor on the multicore SoC to allocate the one or more initiator devices and the one or more target devices to a plurality of virtual machines, and to assign each virtual machine a unique cohort identification (CID) value;
configuring, by a first virtual machine, a first debug trace packet filter connected to control access to a first debug trace probe in the interconnect fabric by latching a first CID value associated with first virtual machine into a first latch register of the first debug trace packet filter;
receiving, at the first debug trace packet filter, a first data trace packet that is sent by a first initiator device for delivery to the first debug trace probe;
evaluating, at the first debug trace packet filter, a second CID value included in the first data trace packet against the first CID value; and
allowing, by the first debug trace packet filter, the first data trace packet to be traced out to the first debug trace probe only if the first CID value matches the second CID value.

11. The method of claim 10, where configuring the first debug trace packet filter comprises storing the first CID value at a latch in the first debug trace packet filter.

12. The method of claim 10 or 11, where evaluating the second CID value against the first CID value comprises comparing, at the first debug trace packet filter, the first CID value to the second CID value.

13. The method of claim 12, where evaluating the second CID value against the first CID value further comprises generating a first packet capture enable signal when there is a match between the first CID value to the second CID value.

14. The method of claim 13, where allowing the first data trace packet to be traced out comprises supplying the first packet capture enable signal to a first pass gate at the first debug trace packet filter which is configured to pass the first data trace packet in response to the first packet capture enable signal.

15. The method of claim 13 or 14, further comprising:
selecting, at a first multiplexer circuit, one of a plurality of security trace enable bit values corresponding to the plurality of virtual machines for output as a second packet capture enable signal, where each secure trace enable bit indicates if a corresponding virtual machine is authorized to send a secure data trace packet; and
evaluating, at the first debug trace packet filter, a first security bit value included in the first data trace packet against second packet capture enable signal indicating whether the first data trace packet is a secure data trace packet or an unsecure data trace packet; and
allowing, by the first debug trace packet filter, the first data trace packet to be traced out to the first debug trace probe as a secure data trace packet only if the first security bit value matches the second packet capture enable signal.
